# EUROPÄISCHE PATENTANMELDUNG

(11) **EP 1 275 619 A2**
(43) Veröffentlichungstag der Anmeldung: **15.01.2003**
(21) Anmeldenummer: 02014498.6
(22) Anmeldetag: 29.06.2002
(51) Int. Cl.: C03B 5/02, C03B 5/12, C03B 5/225

(54) **Vorrichtung zum Schmelzen und Läutern hochreiner optischer Gläser**

(30) Priorität: 10.07.2001 DE 10133469
(71) Anmelder: Schott Glas, 55122 Mainz (DE); CARL-ZEISS-STIFTUNG trading as SCHOTT GLAS, 55122 Mainz (DE)
(72) Erfinder: Römer, Hildegard, Dr., 61184 Karben (DE); Kiefer, Werner, Dr., 55126 Mainz (DE); Kolberg, Uwe, Dr., 55252 Mainz-Kastel (DE); Schäfer, Ernst-Walter, 55576 Welgesheim (DE); Räke, Guido, 55452 Rümmelsheim (DE)
(74) Vertreter: Dr. Weitzel & Partner

(57) **Zusammenfassung**

Die Erfindung betrifft eine Vorrichtung zum Erschmelzen hochreiner optischer Gläser und/oder zum Behandeln von hierfür bestimmten Schmelzen in einem nachgeschalteten Läuter- oder Homogenisierungsprozeß unter Anwendung der Skull-Technik.

Die Vorrichtung ist gekennzeichnet durch die Verwendung von Metallrohren, deren Oberfläche frei von glasfärbenden lonen ist.

## Beschreibung

Die Erfindung betrifft den Glasherstellungsprozeß, insbesondere das Herstellen und Behandeln von Glasschmelzen.

Der Glasherstellungsprozeß beginnt mit dem Einschmelzen von sogenanntem Gemenge oder von Scherben. An den Schmelzprozeß schließt sich ein Läuterprozeß an, der dazu dient, physikalisch oder chemisch gebundene Gase aus der Schmelze auszutreiben.

An optische Gläser werden in zunehmendem Maße extreme Anforderungen bezüglich Transmission, Teilchenfreiheit und Schlierenfreiheit gestellt.

Üblicherweise werden optische Gläser in Tiegeln aus Platin geschmolzen. Dabei kommt es bei entsprechend aggressiven Gläsern oft zu einem Abtrag von Pt oder PtOₓ. Das PtOₓ führt zu einer Verfärbung, insbesondere im UV und im blauen Spektralbereich. Die Auflösung des Pt beziehungsweise die Reduktion von PtOₓ zu Pt führt zu störenden Pt-Teilchen im Glas, die insbesondere bei Gläsern für Laseranwendungen nicht akzeptabel sind.

Da das Platin insbesondere während dem Einschmelzen des Gemenges angegriffen und gelöst wird, wird der Einschmelzprozeß bevorzugt in einer Einschmelzwanne aus keramischem Feuerfestmaterial durchgeführt. An die keramische Einschmelzwanne schließt sich meist eine Pt-Läuterkammer und ein Homogenisierungssystem aus Pt an. Als keramisches Feuerfestmaterial für die Einschmelzwanne wird vorzugsweise Kieselglas eingsetzt. Es gibt jedoch optische Gläser, wie zum Beispiel die Lanthanboratgläser oder die fluorhaltigen Gläser, die Kieselsäure so stark auflösen, daß eine wirtschaftliche Fertigung nicht möglich ist. Aber bereits bei etwas weniger aggressiven Gläsern bilden sich Schlieren durch die Kieselglasauflösung. Diese Schlieren werden im Laufe des weiteren Schmelzprozesses jedoch nicht mehr vollständig aufgelöst. Bei Anwendungen mit höchsten Anforderungen bezüglich Homogenität, wie sie zum Beispiel für Stepperobjektive in der Chipfertigung verlangt werden, können diese Schlieren nicht akzeptiert werden.

In einer Reihe von Patenten wird deshalb das Schmelzen hochreiner Gläser in einem luft- oder wassergekühlten Quarztiegel beschrieben (US PS 3,997,313, GB PS 1 404 313, EP 0109131). Die Luft- beziehungsweise Wasserkühlung vermindert zwar den Abtrag von SiO₂, kann ihn jedoch nicht verhindern. Innerhalb des Tiegels und über die Dauer der Schmelze kommt es zu Temperaturschwankungen und damit zur Korrosion des Tiegels.

Andere keramische Feuerfestmaterialien wie Al₂O₃, die dem Glasangriff besser widerstehen würden, sind im allgemeinen relativ stark mit Übergangselementen wie Fe verunreinigt, so daß sie für Anwendungen, bei denen es auf hohe Transmission ankommt, wie zum Beispiel Glaslichtleitfasern für die Beleuchtungstechnik, nicht geeignet sind.

Eine weitere Vorrichtung zum Schmelzen von Gläsern ist das Skull-schmelzen. Das Prinzip ist zum Beispiel in der US PS 4,049,384 beschrieben. Hierbei wird ein Tiegel verwendet, dessen Umfassungswandung aus kühlbaren Metallrohren gebildet ist. Beim Schmelzbetrieb bildet sich im Bereich dieser Wandung eine Kruste (Skull) aus arteigenem Material aus, so daß die Metallrohre auf der mit der Schmelze in Kontakt stehenden Seite hiervon bedeckt sind. Die Skull-Schmelztechnik findet bevorzugt Einsatz beim Schmelzen von hochschmelzenden Gläsern oder Kristallen zur Herstellung von feuerfesten Materialien oder zur Züchtung von Kristallen wie zum Beispiel ZrO₂. Das hochschmelzende Ausgangsmaterial (Gemenge) bildet im Bereich der Wandung eine Kruste aus gesintertem, arteigenem Material aus. Der Vorteil der Skull-Schmelztechnik beruht darin, daß eine Schlierenbildung unterbunden wird, da das Glas im arteigenen Material geschmolzen wird.

Das Prinzip des Skull-Tiegels wird sowohl beim Schmelzprozeß als auch beim Läuterprozeß mit Erfolg angewandt. Der Skull-Tiegel wurde auf vielfältige Weise weiterentwickelt. Siehe beispielsweise DE 199 39 772 A1. Dort ist ein sogenannter Pilz-Skull-Tiegel beschrieben. Dabei wird eine Korrosion der gekühlten Metallrohre oberhalb der Schmelze vermieden. Die durch Flüssigkeit gekühlten Metallrohre sind im oberen Bereich in Form eines Pilzes nach außen abgebogen. Auf die gekühlten Metallrohre ist im kälteren Bereich ein Keramikring aufgesetzt. Auf diese Weise sind die Metallrohre auf der der Schmelze zugekehrten Seite vollständig mit Glasschmelze bedeckt.

Untersuchungen mit einem solchen Pilz-Skull-Tiegel haben gezeigt, daß die Verunreinigungen im Glas zwar herabgesetzt; aber nicht vollständig vermieden werden können.

So sind Schmelzen, die, in Skull-Tiegeln behandelt wurden - beispielsweise beim Schmelzen oder beim Läutern - zwar schlierenfrei. Sie weisen jedoch häufig Färbungen auf, die die Qualität des Glases stark beeinträchtigen und die das Glas für gewisse optische Anwendungen unbrauchbar machen. So kommen beispielsweise Färbungen im Glas vor, die mehr oder minder stark sein können. Solche Färbungen treten selbst dann auf, wenn die gekühlten Metallrohre des Skull-Tiegels beipielsweise aus gewissen Edelstahl oder Kupfer bestehen.

Der Erfindung liegt die Aufgabe zugrunde, eine Vorrichtung anzugeben, womit hochreine optische Gläser geschmolzen und/oder geläutert werden können. Dabei sollen beim Schmelzprozeß oder Läuterprozeß keine Metall-Teilchen, keine färbenden Ionen oder Fremdschlieren in die Glasschmelze eingetragen werden. Die Glasqualität soll weder durch metallische Teilchen, noch durch färbende Ionen, noch durch Schlieren beeinträchtigt werden. Die Menge an färbenden Ionen muß so gering sein, daß sie sich allenfalls noch mittels Dämpfungsspektren an sehr langen (³ 10 m) Glaslichtleitfasern quantifizieren läßt. Die erfindungsgemäße Vorrichtung soll auch geeignet sein für Glassschmelzen hochaggressiven Charakters.

Diese Aufgabe wird durch die Merkmale der unabhängigen Ansprüche gelöst.

Die Erfinder haben erkannt, daß sich bei niedrig schmelzenden Gläsern, zum Beispiel bei den meisten optischen Gläsern, beim Skull-Schmelzen, keine dicke Skull-Schicht aus gesintertem arteigenem Material, sondern nur eine dünne Glasschicht bildet, die unmittelbar an den gekühlten Metallrohren anliegt. Überraschenderweise wurde gefunden, daß durch diese dünne Glasschicht hindurch ein lonenaustausch zwischen der Oberfläche der Metallrohre und der heißen Glasschmelze stattfindet. Dies ist um so überraschender, als die Metallrohre zum Beispiel mit Wasser gekühlt werden.

Die Erfindung beruht darauf, daß Material der kühlbaren Rohre oder zumindest deren Oberflächenschicht so zu gestalten ist,-daß entweder kein lonenaustausch zwischen den kühlbaren Rohren und der Schmelze stattfindet oder daß die Ionen, die durch die dünne Glasschicht in die Glasschmelze diffundieren, die Glaszusammensetzung nicht störend beeinflussen. Es war zwar bekannt, daß gewisse Metalle z. B. Platin, Iridium oder Rhodium die Eigenschaft haben, eine Glasschmelze einzufärben. Das überraschende besteht jedoch in der genannten Erkenntnis des lonen-Austauschs durch die dünne Glasschicht hindurch.

Ein lonenaustausch zwischen der Oberfläche der Rohre und der Glasschmelze kann unterbunden werden, wenn die Oberfläche der Rohre in metallischer Form vorliegt, das heißt, wenn die Oberfläche der Rohre nicht oxidiert ist. In metallischer Form können die Elemente nicht an dem Ionenaustausch teilnehmen.

Versuche haben gezeigt, daß bei der Verwendung von Pt-Rohren keine meßbare Pt-Diffusion durch die Glasschicht erfolgt. An den wassergekühlten Pt-Rohren findet praktisch keine Oxidation des Edelmetalls Pt statt. Pt ist ein sehr edles Metall und ist sowohl gegen den Luftsauerstoff als auch gegen den Sauerstoff aus der Glasschmelze resistent. Neben Pt ist auch Au gegen Sauerstoffangriff resistent. Aus Stabilitäts- und Kostengründen ist jedoch der Einsatz von Au-Röhren nicht sinnvoll.

Rohre aus Ir, Pd und Rh sind zwar relativ oxidationsbeständig, die Diffusion geringer Mengen in die Glasschmelze ist jedoch nicht auszuschließen. Da die Ionen dieser Elemente das Glas färben, sind Rohre aus diesen Metallen für höchste Ansprüche nicht geeignet. Werden an die Transmission etwas geringere Anforderungen gestellt, dann können auch diese Metalle eingesetzt werden.

W, Mo und Nb sind bei niedrigen Temperaturen auch oxidationsbeständig. Diese Metalle hben den Nachteil, daß sie schwer zu verarbeiten sind und ihre Ionen das Glas färben.

Untersuchungen haben weiterhin gezeigt, daß der lonenaustausch auch unterbunden wird, wenn nur die Oberflächen der Rohre mit den Edelmetallen beschichtet sind. Eine Veredelung ist zum einem eine kostengünstigere Möglichkeit und zum anderen lassen sich beschichtete Rohre aus Kupfer oder Edelstahl besser zu einem Skull-Tiegel zusammenbauen. Es ist auch möglich, den fertig zusammengebauten Skull-Tiegel zu beschichten.

Rohre aus Silber oder Rohre mit einer Silberbeschichtung können nicht ohne weiteres eingesetzt werden. Ag neigt auch bei Zimmertemperatur zur leichten Oxidbildung an der Oberfläche. Als einwertiges Ion diffundiert Ag⁺ relativ leicht. In der Glasschmelze ist das Ag⁺ zwar farblos, es kann aber als relativ edles Metall leicht zum Ag⁰ reduziert werden. Selbst wenn das Ag⁰ sich nicht zu einem großen Metallteil zusammenlagert, färbt es das Glas leicht gelblich. Silberrohre oder versilberte Rohre können daher nur bei stark oxidierenden Schmelzen eingesetzt werden.

Ein lonenaustausch zwischen dem Metallrohr und der Glasschmelze kann zugelassen werden, wenn es sich bei dem Ion, das von dem Rohr in die Glasschmelze wandert, um ein nicht färbendes Ion handelt, das in das Glasgitter eingebaut wird.

Bei der Verwendung von Al-Rohren ist eine lonendiffusion von Al³⁺ in die Glaschmelze nicht auszuschließen, da die Oberfläche von Aluminiummetall stets mit einer dünnen Oxidschicht überzogen ist. Beim Al³⁺ handelt es sich um einen Netzwerkbildner, der vollkommen farblos ist. Versuche mit einem Skull-Tiegel aus AI-Rohren zeigen keinerlei Färbung der Glasschmelze beziehungsweise des geschmolzenen Glases. Eine Schlierenbildung kann ebenfalls nicht stattfinden, da die Menge an Al³⁺, die von dem Rohr in die Glasschmelze diffundiert, viel zu gering ist, um eine Schliere zu bilden. Analog den Al-Rohren können auch andere Metallrohre ohne das Glas färbende Bestandteile eingesetzt werden, wie zum Beispiel Magnesium- oder Zink-Rohre. Auch diese Metalle können als Ionen in die Glasschmelze eindiffundieren, ohne die Transmission des Glases herabzusetzen.

Metallrohre, wie zum Beispiel Kupfer- oder Edelstahl-Rohre können auch mit diesen Metallen wie AI, Zn, Sn und Mg beschichtet werden, da nur die Oberfläche der Rohre mit der Glasschicht und über die Glasschicht mit der Schmelze in Kontakt kommt. Eine störende Diffusion innerhalb des Metallrohres wurde bei beschichteten Rohren nicht festgestellt.

Eine weitere Möglichkeit ist auch, die Metallrohre mit passivierenden Schichten zu versehen. Unter passivierender Schicht werden hier Schichten aus Metalloxiden, Metallnitriden, Metallcarbiden, Metallsiliziden oder deren Mischungen verstanden. Als Metallionen dürfen in diesen Verbindungen keine die Glasschmelze färbenden Metalle eingesetzt werden.

Als Metalloxidverbindungen zur Beschichtung der Metallrohre kommen zum Beispiel Al₂O₃, MgO, ZrO₂, Y₂O₃ in Frage und gegebenenfalls deren Nitride und Carbide.

Für Wolfram-Carbide oder Molybdänsilizide gilt das gleiche wie bei den Metallen, das heißt unter Umständen können geringe Mengen in das Glas eindiffundieren. Hier entscheidet die Anwendung über die Verwendbarkeit.

### Beispiel 1:

Es wurde ein optisches Glas aus der Familie der Lanthanboratgläser (Zusammensetzung siehe Tabelle 1) in einem mit Pt beschichteten Edelstahl-Skull-Tiegel geschmolzen. Folgende Schmelzparameter wurden verwendet:
Einlegen: 1240 - 1260° C
Läutern: 1280° C
Abstehen: 1240 - 1200° C
Guß: ca. 1200° C im Tiegel; ca. 1100° C im Speiser

Die Schmelze wurde in Formen verschiedener Geometrien gegossen (Scheiben, Stäbe, Riegel) und von 650° C auf Raumtemperatur gekühlt.

Folgende Werte wurden gemessen:
nd = 1,71554; (1,71300)
vd = 53,41; (53,83)
ΔPg, F =-0,0084; (-0,0083)
Ti(400nm; 25mm) = 0,972;(0,94)

Die in Klammern angegebenen Referenzwerte wurden an einem Glas der selben Zusammensetzung gemessen, daß mit der herkmmlichen Schmelztechnologie, das heißt in einem induktiv beheitzten Pt-Tiegel geschmolzen wurde.

Die Verbesserung ist daran zu erkennen, daß die Reintransmission im blauen Spektralbereich entscheiden angestiegen ist. Absorptionen im Blauen verursachen einen gelblichen Farbstich, so daß bei Beobachtungs-Anwendungen wie Photographie, Mikroskopie und Fernrohren eine möglichst geringe Absorption gewünscht ist. Die Abweichungen bei Brechwert und Abbezahl sind durch die etwas höheren Verdampfungsraten der neuen Technologie bedingt und lassen sich durch Feineinstellungen am Gemenge leicht korrigieren.

Ein weiterer Versuch mit dem gleichen Gas unter vergleichbaren Schmelzbedingungen lieferte folgende Werte:
nd= 1,70712; (1,71300)
vd= 53,68; (53,83)
ΔPg, F =-0,0084; (-0,0084)
Ti(400nm; 25mm) = 0,965;(0,94)
Ti(365nm; 255mm) = 0,831 (0,72)

Hier wurde der für viele UV-Anwendungen charakteristische Wert der Transmission bei 365 nm mit bestimmt. Diese Wellenlänge entspricht einer wichtigen Emissionslinie von Hg-Dampflampen, die für viele Anwendungen genutzt wird. Die Lichtausbeute bei dieser Wellenlänge kann bei Verwendung der neuen Technologie um 0,111 oder 15 % gesteigert werden, was einem deutlichen Produktvorteil entspricht. Man erkennt des weiteren an der Brechtwertabweichung zu niedrigeren Werten die Möglichkeiten der oben angesprochenen Korrekturmaßnahmen.

### Beispiel 2:

Hier handelt es sich um ein Glas aus der Familie der Alkali-Zink-Silikatgläser. Es wird für die Herstellung von Fasern für die Beleuchtungstechnik (Lichtleiter) verwendet. Hier ist eine gute Transmission und ein geringer Farbstich von entscheidender Bedeutung. Ein Pt-Kontakt beim Schmelzen sollte daher weitestgehend vermieden werden.

Bisher hat man sich beholfen, indem man in Kieselglastiegeln gechmolzen hat. Bedingt durch den hohen ZnO- (>30 %) und R₂O-Gehalt (>10 %; R = Na, K) sind diese Gläser jedoch gegenüber Kieselglas ausgesprochen aggressiv. Ein normaler Kieselglastiegel mit einer Wandstärke von 4 - 5 mm ist oft schon nach einer Rroduktionsdauer von einem Tag so dünn geworden, daß eine weitere Verwendung nicht mehr möglich ist. In 10 - 20 % aller Fälle ist der Tiegel gebrochen, die Schmelze war damit unbrauchbar.

Für diese Glasfamilie konnte ein Skulltiegel aus Aluminium erfolgreich eingesetzt werden. Er wies ebenso wie der Tiegel aus Pt-beschichtetem Edelstahl eine im Prinzip unbegrenzte Standzeit auf. Es traten keine färbenden Verunreinigungen auf. Es konnte kein Al-Eintrag ins Glas festgestellt werden. Außerdem beeinflussen geringe Mengen Al₂O₃ bis zu 0,5 % die gewünschten Glaseigenschaften nicht, sofern es sich-um Reinstmaterial handelt. Folgende Schmelzparameter wurden verwendet:
Einlegen: 1300° C
Läutern: 1450° C
Abstehen: 1350°C
Guß: ca. 1250° C im Tiegel; ca. 1200° C im Speiser.

Folgende charakteristische Reintransmissionswerte wurden bestimmt (in Klammern sind wieder die Werte für das gleiche Glas angegeben, das aber mit konventioneller Schmelztechnik in einem induktiv beheitzten Pt-Tiegel geschmolzen wurde):

| | |
|---|---|
| Ti(300nm; 25mm) = 0,0010 | (0,0011) |
| Ti(330nm; 25mm) = 0,6263 | (0,5565) |
| Ti(350nm; 25mm) = 0,9680 | (0,8959) |
| Ti(370nm; 25mm) = 0,9951 | (0,9600) |
| Ti(400nm; 25mm) = 0,9995 | (0,9839) |
| Ti(420nm; 25mm) = 0,9972 | (0,9890) |
| Ti(450nm; 25mm) = 0,9985 | (0,9924) |

Bei 300 nm befindet man sich in dem Bereich, in dem das Glas selbst absorbiert. Hier sind keine Unterschiede in der Reintransmission zu erkennen. Bei allen höheren Wellenlängen erkennt man deutlich den Einfluß von Pt, der die Reintransmissionswerte des konventionell geschmolzenen Glases nach unten drückt.

Besonders deutlich wird dies bei den Wellenlängen 330 nm und 350 nm, der Einfluß ist aber bis ins sichtbare hinein nachweisbar. Man muß hierbei auch berücksichtigen, daß die Reintransmission auf einen Maximalwert von 1 normiert ist, so daß sie in der Nähe von 1 ein schlechtes Maß für die erzielten Verbesserungen ist. Ein besseres Maß ist hier die Dämpfung, ausgedrückt in dB/km. Für 450 nm erhält man 26dB/km für die neue Schmelzvorrichtung und 130 dB/km für die in einem Pt-Tiegel hergestellte Schmelze. Die Verbesserung ist hier deutlich zu erkennen (kleinere Werte sind hier besser als große).

**Tabelle 1**

| Glaszusammensetzung für die Beispiele 1 und 2 | | |
|---|---|---|
| Oxid | Beispiel 1 | Beispiel 2 |
| B₂O₃ | 40 | - |
| CaO | 6 | - |
| La₂O₃ | 42 | - |
| SiO₂ | 2 | 45 |
| ZnO | 6 | 38 |
| ZrO₂ | 4 | - |
| Sb₂O₃ | 0,05 | - |
| Na₂O | - | 8 |
| K₂O | - | 9 |
| As₂O₃ | - | 0,3 |

Für die Gläser nach Beispiel 1 sind die Komponenten B₂O₃ und Ln₂O₃ (Ln= Sc, Y, La, Gd, Yb, Lu) charakteristisch. Sie können in einem weiten Konzentrationsbereich variiert werden. Alle anderen Komponenten sind optional und können um weitere ergänzt werden. Es können hiermit optische Gläser der Familien LaK, LaF, und LaSF in einem weiten Brechwert- und Abbezahlbereich realisiert werden.

Für die Gläser nach Beispiel 2 sind die charakteristischen Komponenten in der Tabelle angegeben. Es können Teilsubstitutionen bis 10 % nach den üblichen Regeln vorgenommen werden, also beispielsweise ZnO gegen BaO, Na₂O gegen Li₂O, SiO₂ gegen Na₂O + Al₂O₃ und so weiter. In speziellen Fällen kann der Rahmen der Substitution auch größer ausfallen.

Die Erfindung sowie der Stand der Technik sind anhand der Zeichnung näher erläutert. Darin ist im einzelnen folgendes dargestellt:
- Figur 1: zeigt einen pilzförmigen Skull-Tiegel in einer Aufrißansicht.
- Figur 2: zeigt eine Anlage zum Schmelzen, Läutern und Homogenisieren in schematischer Darstellung.
- Figur 3: zeigt eine weitere Anlage zum Schmelzen, Läutern und Homogenisieren in einer schematischen Darstellung.
- Figur 4: zeigt eine Anlage zum Schmelzen und Läutern.
- Figur 5: zeigt einen Skull-Tiegel herkömmlicher Bauart.

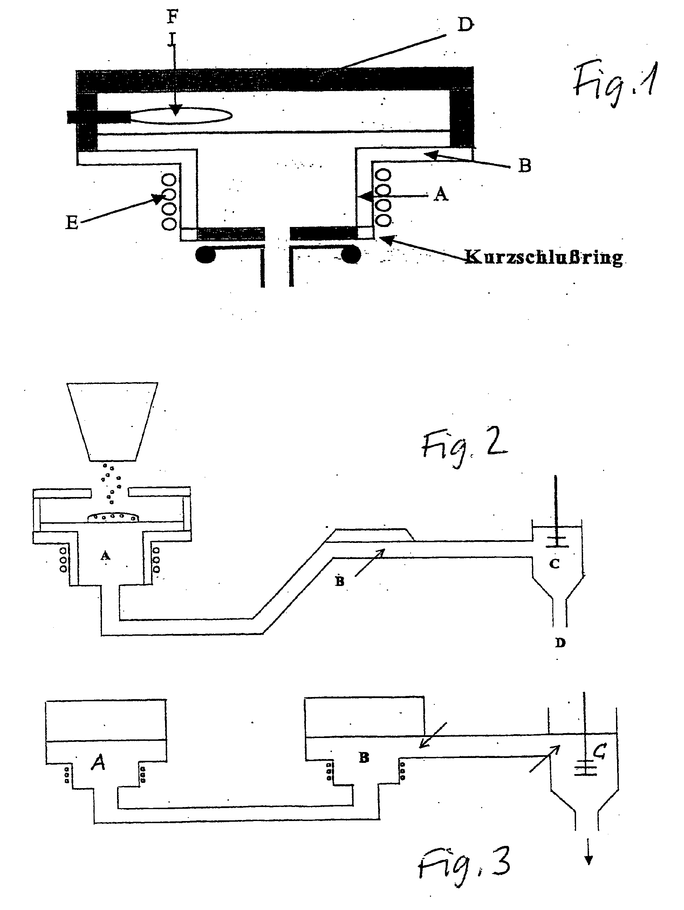

Der in Figur 1 gezeigte Pilz-Skull-Tiegel A besteht aus einem Kranz wassergekühlter Aluminiumrohre, die im oberen Teil um 90 Grad nach außen abgebogen sind. Auf die nach außen gebogenen Rohre ist ein Ring aus feuerfestem Material aufgesetzt, auf dem die Oberofenabdeckung liegt D. Der Skull-Tiegel wird über die Spule E mit Hochfrequenz beheizt. Zusätzlich kann die Oberfläche auch mit einem Brenner F beheizt werden.

### Die in Figur 2 gezeigte Anlage stellt im einzelnen folgendes dar:

Das über einen Einfülltrichter eingefüllte Gemenge wird in einem Pilz-Skull-Tiegel A mit wassergekühlten Platinrohren aufgeschmolzen, da der stärkste Angriff auf das Wannenmaterial beim Einschmelzen erfolgt. Nach dem Einschmelzen kann das Glas in einer Platinrinne B geläutert, in einem Platinrührer C homogenisiert und in dem Speiser aus Platin D konditioniert werden, ohne daß eine wesentliche Verunreinigung durch das induktiv beheizte Platin zu befürchten ist.

Die in Figur 3 dargestellte Anlage weist einen Pilz-Skull-Tiegel A und einen Pilz-Skull-Tiegel B mit wassergekühlten, platinbeschichteten Kupferrohren auf, ferner eine Einrichtung C zum Homogenisieren und Konditionieren.

Bei stark aggressiven Gläsern ist es vorteilhaft, sowohl das Einschmelzen als auch das Läutern in einem Skulltiegel durchzuführen. Neben dem Einschmelzen findet beim Läutern auf Grund der hohen Temperaturen ebenfalls ein erhöhter Materialangriff statt.

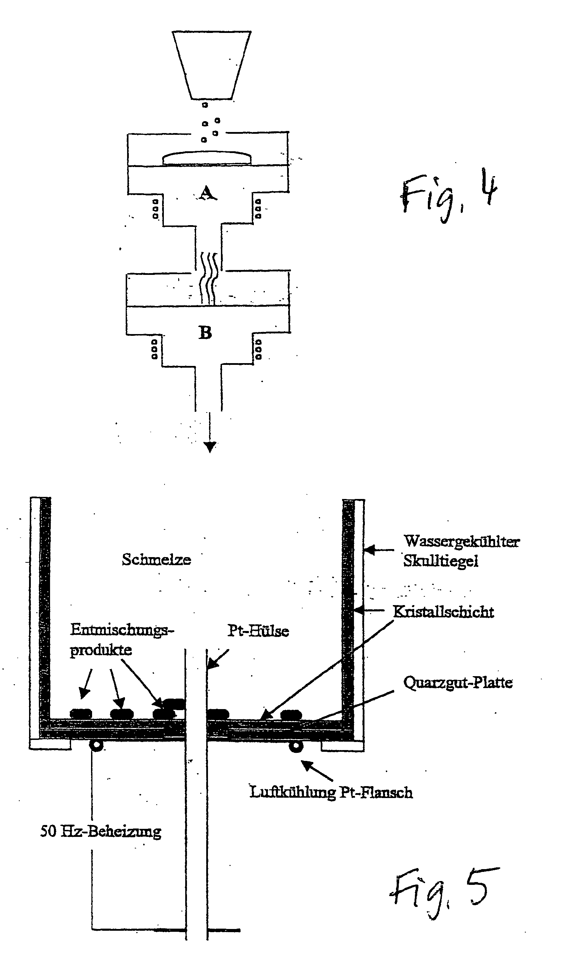

In Figur 4 erkennt man einen Pilz-Skull-Tiegel A zum Erschmelzen von Glas, und einen weiteren, unmittelbar anschließenden, darunter befindlichen weiteren Pilz-Skull-Tiegel B zum Läutern. Beide Skull-Tiegel weisen wassergekühlte, platinbeschichtete Edelstahlrohre auf.

Gegenüber der Ausführungsform von Figur 3 fehlt hierbei ein horizontales Verbindungsstück.

Der Skull-Tiegel gemäß Figur 5 ist von klassischer Bauweise. Er weist wassergekühlte Kupferrohre auf.

Mit dieser Vorrichtung war es nicht möglich, die Gläser in der gewünschten Reinheit zu erhalten. Die Gläser zeigten alle einen leichten Farbstich, der vom Kupfer herrührte.

## Patentansprüche

1. Vorrichtung zum Schmelzen hochreiner optischer Gläser, die frei von metallischen Teilchen, färbenden Oxiden und Fremdschlieren sind, mit Hilfe der Skull-Schmelztechnik, **dadurch gekennzeichnet, dass** die Metallrohre oder die Beschichtungen der Metallrohre des Skull-Tiegels aus einem nicht oxidierenden Material oder aus einem Material, das keine die Glasschmelze färbende Ionen enthält, besteht.

2. Vorrichtung nach Anspruch 1, **dadurch gekennzeichnet, daß** die Metallrohre des Skull-Tiegels aus einem nicht oder nur sehr gering oxidierendem Material wie zum Beispiel Platin oder einer Platinlegierung besteht.

3. Vorrichtung nach Anspruch 1, **dadurch gekennzeichnet, daß** die Metallrohre des Skull-Tiegels zum Beispiel aus Kupfer oder Stahl bestehen und deren Beschichtung aus einem nicht oder nur sehr gering oxidierendem Material besteht wie zum Beispiel Platin, Gold, Silber oder deren Legierungen.

4. Vorrichtung nach Anspruch 1, **dadurch gekennzeichnet, daß** die Metallrohre des Skull-Tiegels aus einem Material bestehen, das keine die Glasschmelze färbende Ionen enthält wie zum Beispiel Aluminium, Magnesium oder Zink.

5. Vorrichtung nach Anspruch 1, **dadurch gekennzeichnet, daß** die Metallrohre des Skull-Tiegels zum Beispiel aus Kupfer oder Stahl bestehen und deren Beschichtung aus einem Material besteht, das keine die Schmelze färbende Ionen enthält, wie zum Beispiel einer Metallbeschichtung aus Aluminium, Magnesium, Zinn, Zink oder deren Legierungen

6. Vorrichtung nach Anspruch 1, **dadurch gekennzeichnet, daß** die Metallrohre des Skull-Tiegels zum Beispiel aus Kupfer oder Stahl sind und deren Beschichtung aus einem Metalloxid wie zum Beispiel Al₂O₃, MgO, ZrO_{2,} Y₂O_{3,} oder deren Kombination; oder aus einem Metallnitrid; oder aus einem Metallcarbid wie zum Beispiel Woframcarbid; oder aus einem Metallsilicid wie zum Beispiel Molybdänsilicid oder deren Kombinationen besteht.

7. Vorrichtung nach Anspruch 1 bis 6, **dadurch gekennzeichnet, daß** der Skull-Tiegel in zylindrischer Form aufgebaut-ist.

8. Vorrichtung nach Anspruch 1 bis 7, **dadurch gekennzeichnet, daß** der Skull-Tiegel in Form eines Pilz-Tiegels aufgebaut ist.
